## Europäisches Patentamt

(19) **European Patent Office**

**Office européen des brevets**

(11) Publication number: **0 261 494 B1**

(12) # EUROPEAN PATENT SPECIFICATION

(45) Date of publication of the patent specification:
27.12.90

(51) Int. Cl.⁵: **A63B 29/02, G01S 15/74**

(21) Application number: **87113108.2**

(22) Date of filing: **08.09.87**

(54) An acoustic transmitter and receiver, particularly for localizing casualties in avalanche rescue operations.

(30) Priority: **15.09.86 SE 8603862**

(43) Date of publication of application:
**30.03.88 Bulletin 88/13**

(45) Publication of the grant of the patent:
**27.12.90 Bulletin 90/52**

(84) Designated Contracting States:
**AT CH DE FR IT LI**

(56) References cited:
**CA-A- 904 389**
**DE-B- 2 659 901**
**FR-A- 2 455 749**
**FR-A- 2 543 712**

**IEEE INTERNATIONAL CONFERENCE ON COMMUNICATIONS, Minneapolis, 17th - 19th June 1974, pages 27B-1 to 27B-3, IEEE, US; C.R. KRAUS: "An ultrasonic personnel location system"**

(73) Proprietor: **NIXFLU AB, Hamnen Box 229, S-430 93 Hälsö(SE)**

(72) Inventor: **Rönnbäck, Sture, Varvsvägen 29, S-430 93 Hälsö(SE)**

(74) Representative: **Ferkinghoff, Claes-Göran et al, AWAPATENT AB Box 53252, S-400 16 Göteborg(SE)**

ACTORUM AG

## Description

The subject invention concerns an accoustic transmitter and receiver which is designed to be used e.g. by rescue and search parties, particularly to localize casualties in avalanche accidents. The transmitter/receiver is equipped with a batter and comprises a receiver which is activated upon receiption of an accoustic signal of a predetermined frequency to generate an electric current, current amplifier means and a first transmitter designed to transmit an accoustic signal.

A comparatively large number of people are buried alive in avalanche accidents every year. Reasearch has shown that people buried under masses of snow can survive for comparatively long periods of time. However, if they remain buried for a long time, such as for one or a couple of hours, most victims will be affected with frostbite and, worse still, some will suffer brain damages as a result of oxygen starvation. It is therefore of paramount importance that the rescue and search parties are able to localize people buried under the avalanche quickly to allow the victims to be dug out soonest possible. However, the most difficult problem is to localize persons buried alive underneath the considerable masses of snow that usually are shifted by the avalanche.

Several different methods exist to localize persons buried alive in avalanches. One example of a method for this purpose is to use "rescue" dogs, that is, dogs which are specially trained to search for and localize persons underneath masses of snow. However, drawbacks connected with the use of dogs of this kind are that it is expensive to train dogs and also that the dogs must be transported to the area of the avalanche before the actual search and localization of victims can start.

Another prior-art method of localizing victims of avalanche accidents is based on the use of equipment which requires that the persons in danger areas or in avalanche-proned areas carry a reflector comprising a diode and an antenna. The reflector is a comparatively small device which may be attached to e.g. a ski boot or the like. The drawback with this system is that special transmitter/receiver equipment is required to localize the reflectors. This equipment, which weighs about 15 kilos, thus must be transported to the place of accident before the actual localization work can start. Also with this method, therefore, the overall disadvantage is the considerable time lost before the localization, and thus the rescue, of victims can really begin. This time delay may be a decisive factor on which it depends whether the avalanche casualties will suffer serious brain injuries or die from lack of oxygen.

Further, an accoustic transmitter and receiver in accordance with the device mentioned in the introductory part of the Specification is known from FR-A 2 543 712. However, this receiver (and transmitter) is activated by a whistle from a person and this person has to find just the right frequency in his whistle. Otherwise, the transmitter will remain silent.

The purpose of the subject invention is to provide equipment designed to localize people buried underneath considerable masses of snow in avalanche accidents or the like, which equipment does not depend on time-consuming transportation of specially trained rescue personnel and/or expensive equipment or apparatuses from the place of stand-by to the place of accident.

This purpose is achieved in accordance with the invention in that the persons in the zone or area deemed to be hazardous are equipped with an inexpensive and simple transmitter/receiver. The invention is characterized therein that the transmitter/receiver is also provided with a second transmitter which is designed, upon activation, to generate an accoustic signal having the same predetermined frequency to activate the receiver as the signal emitted by the first transmitter.

The transmitter/receiver comprises both a seal-carrying transmitter part and a combination transmitter/receiver part. In the event of an avalanche accident the first person arriving at the place of accident or a person involved in the avalanche accident but not seriously injured thereby can break the seal on his transmitter and with the aid thereof emit a signal which is received by the transmitter/receiver units carried by the avalanche casualties. Upon reception of this signal the units will emit a strong accoustic signal with a frequency that passes through snow without difficulty. In this way casualties in avalanche accidents can be localized very shortly after settlement of the masses of snow and the chances to rescue people alive and to prevent serious brain injuries or frostbite are considerably increased.

The invention will be described in the following with reference to the accompanying drawings, wherein

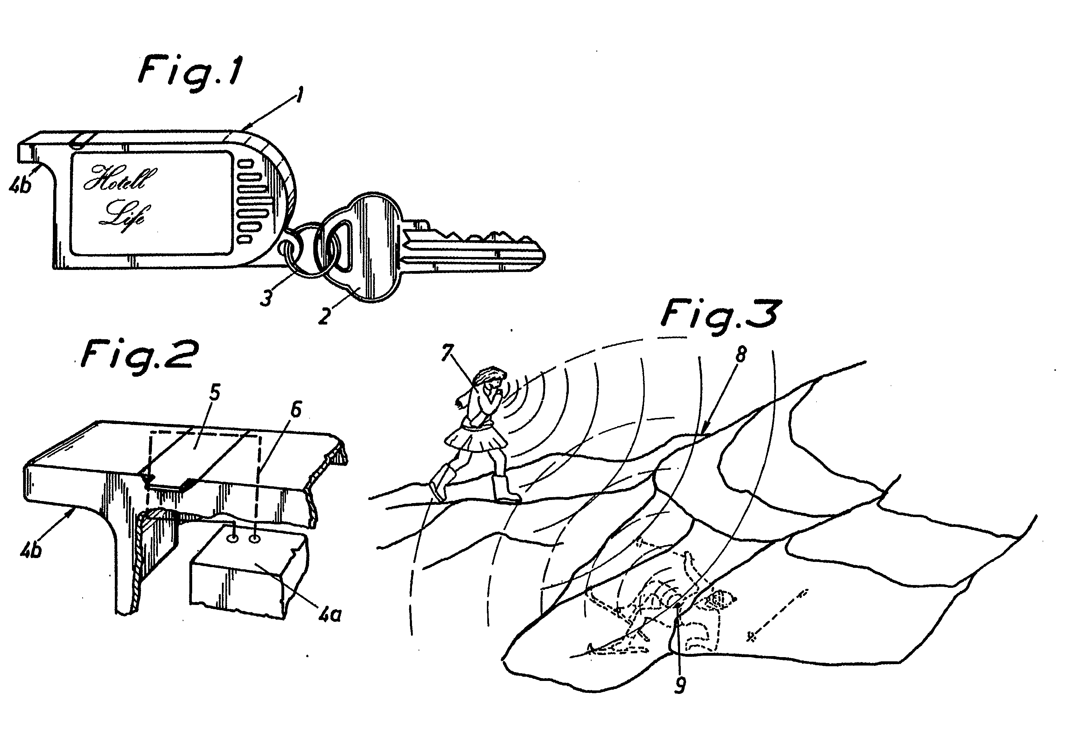

Fig. 1 is a perspective view of a transmitter/receiver in accordance with the invention designed as a key ring,

Fig. 2 illustrates part of the key ring on an enlarged scale and one embodiment of a seal for the transmitter part, and

Fig. 3 shows one example of usage of a transmitter/receiver in accordance with the invention.

In accordance with the embodiment illustrated the transmitter/receiver 1 has an attachment part which is intended to be used to secure e.g. a hotel-room key 2 thereon by means of a key ring 3. The cover may have smooth areas on which to apply the name of the hotel, the room number, advertisement texts, etcetera.

The combination transmitter/receiver part 4a comprises a piezo-electric crystal element which upon receipt of an accoustic signal of a predetermined frequency generates a low intensity current. The current is amplified in an amplifier, which in turn activates an oscillator, causing the crystal element to emit a powerful tone. To power the amplifier and the oscillator, respectively, a battery, preferably a mercury battery, is provided. All these components are known per se and therefore are not shown separately.

In accordance with the embodiment chosen to illustrate the invention the transmitter part 4b is in the form of a whistle. To prevent mischievous or unintentional use of or tampering with the whistle the latter is provided with a seal 5 which cannot be put back in position, once it has been removed. In order also to prevent that the receiver part of the associated transmitter/receiver is activated when the transmitter part 4b is used and thus disturbs the function the seal 5 is also arranged to make the associated receiver inoperative when the seal is removed, either because it causes a circuit 6 to open or because one of the electronic parts is positioned in such a manner that it will be removed together with the seal.

The transmitter/receiver 1 in accordance with the invention is highly advantageous therein that in the event of an avalanche accident the person or persons 7 in the immediate vicinity of the place of accident can start the localizing work without any loss of time to find persons 9 buried underneath the masses of snow 8.

When the accoustic signal emitted by the rescue person 7 reaches the receiver attached to the person 9 buried underneath the snow this receiver activates the associated oscillator, whereby the crystal element of the receiver is made to emit a strong accoustic signal which penetrates through the snow, allowing the buried person 9 to be found.

The invention is not limited to the embodiment described in the aforegoing. Instead of designing the second transmitter in the form of a whistle it could be designed as an electronic sound-emitting device which is activated by a sealed push button. Obviously it is also quite possible to use the transmitter/receiver in accordance with the invention in other environments than alpine or mountain areas for the purpose of localizing humans or animals.

## Claims

1. An accoustic transmitter and receiver, comprising a battery, a receiver which is activated upon reception of an accoustic signal of a predetermined frequency to generate an electric current, current amplifier means and a first transmitter designed to emit an accoustic signal, characterized therein that the transmitter/receiver (1) is also provided with a second transmitter (4b) which is designed upon activation, to generate an accoustic signal having the same predetermined frequency to activate the receiver (4a).

2. A transmitter/receiver as claimed in claim 1, characterized therein that the second transmitter (4b) is a whistle.

3. A transmitter/receiver as claimed in claim 1 or 2, characterized therein that the second transmitter (4b) is provided with a seal (5) which must be broken to allow said transmitter (4b) to become operative.

4. A transmitter/receiver as claimed in claim 3, characterized therein that the seal (5), when being removed, is arranged to cause one or several circuits in said receiver (4a) to open in order to make said receiver inoperative.

5. A transmitter/receiver as claimed in claim 3, characterized therein that the seal (5), when being removed, is arranged to remove or destroy part of the electronic unit of the receiver (4a) in order to make said receiver inoperative.

## Patentansprüche

1. Akustischer Sender und Empfänger, mit einer Batterie, einem Empfänger, der bei Empfang eines akustischen Signals mit einer vorbestimmten Frequenz zur Erzeugung eines elektrischen Stroms aktiviert wird, einem Stromverstärker und einem ersten Sender zur Abgabe eines akustischen Signals, dadurch gekennzeichnet, daß der Sender/Empfänger (1) auch mit einem zweiten Sender (4b) versehen ist, der bei Aktivierung ein akustisches Signal erzeugt, das die gleiche vorbestimmte Frequenz zur Aktivierung des Empfängers (4a) aufweist.

2. Sender/Empfänger nach Anspruch 1, dadurch gekennzeichnet, daß der zweite Sender (4b) eine Pfeife ist.

3. Sender/Empfänger nach Anspruch 1 oder 2, dadurch gekennzeichnet, daß der zweite Sender (4b) mit einem Siegel (5) versehen ist, das zur Inbetriebsetzung dieses Senders (4b) erbrochen werden muß.

4. Sender/Empfänger nach Anspruch 3, dadurch gekennzeichnet, daß das Siegel (5), wenn es entfernt wird, die Öffnung eines oder mehrerer Schaltkreise im Empfänger (4a) bewirkt, um diesen außer Betrieb zu setzen.

5. Sender/Empfänger nach Anspruch 3, dadurch gekennzeichnet, daß das Siegel (5), wenn es entfernt wird, einen Teil der elektronischen Einheit des Empfängers (4a) entfernt oder zerstört, um diesen außer Betrieb zu setzen.

## Revendications

1. Transmetteur et récepteur acoustique comportant une pile, un récepteur qui est activé par la réception d'un signal acoustique de fréquence prédéterminée pour engendrer un courant électrique, des dispositifs d'amplification du courant, ainsi qu'un premier transmetteur conçu pour émettre un signal acoustique, caractérisé en ce que le transmetteur/récepteur (1) est en outre pourvu d'un second transmetteur (4b) qui est conçu pour engendrer, lorsqu'il est activé, un signal acoustique ayant la même fréquence prédéterminée pour activer le récepteur (4a).

2. Transmetteur/récepteur suivant la revendication 1, caractérisé en ce que le second transmetteur (4b) est un sifflet.

3. Transmetteur/récepteur suivant l'une quelconque des revendications 1 ou 2, caractérisé en ce que le second transmetteur (4b) est pourvu d'une pièce formant scellé (5) qui doit être brisée pour permettre audit transmetteur (4b) de devenir opérationnel.

4. Transmetteur/récepteur selon la revendication 3, caractérisé en ce que La pièce formant scellé (5) est prévue pour produire, lorsqu'elle est enlevée, l'ouverture d'un ou de plusieurs circuits dans ledit récepteur (4a) afin de rendre ledit récepteur inactif.

5. Transmetteur/récepteur selon la revendication 3, caractérisé en ce que la pièce formant scellé (5) est prévue pour enlever ou détruire, lorsqu'elle a été retirée, une partie de l'ensemble électronique du récepteur (4a) afin de rendre ledit récepteur inactif.

## Fig.1

## Fig.2

## Fig.3

EP 0 261 494 B1